# EUROPEAN PATENT APPLICATION

(11) **EP 3 199 885 A1**
(43) Date of publication of application: **02.08.2017**
(21) Application number: 17000177.0
(22) Date of filing: 02.09.2013
(51) Int. Cl.: F24H 9/20, F24D 19/10, F22D 5/26, F24D 3/08, F24D 17/00, F24D 11/00, F24D 12/02

(54) **STRUCTURE FOR CONTROLLING TEMPERATURE OF HOT-WATER SUPPLY FROM WASTE HEAT RECOVERY SYSTEM USING MIXING VALVE**

(30) Priority: 28.09.2012 KR 20120109565; 28.09.2012 KR 20120109569; 28.09.2012 KR 20120109570
(62) Divisional of application: 13840520.4
(71) Applicant: Kyungdong Navien Co., Ltd., Gyeonggi-do 450-818 (KR)
(72) Inventor: Son, Seung kil, 420-030 Gyeonggi-do (KR); Hur, Soo Hyun, 132-920 Seoul (KR); Park, Woo Sung, 447-210 Gyeonggi-do (KR)
(74) Representative: Witzany, Manfred

(57) **Abstract**

The present invention relates to a structure for controlling a temperature of hot-water supply from a waste heat recovery system, and more particularly, to a structure for controlling a temperature of hot-water supply from a waste heat recovery system using a three-way valve capable of stably supplying hot water at a hot-water supply setting temperature during hot-water supply use using the three-way valve and saving energy to improve system efficiency, in a waste heat recovery system recycling waste heat.

## Description

### [Technical Field]

An embodiment of the present invention relates to a structure for controlling a temperature of hot-water supply from a waste heat recovery system, and more particularly, to a structure for controlling a temperature of hot-water supply from a waste heat recovery system using a three-way valve capable of stably supplying hot water at a hot-water supply setting temperature during hot-water supply use using the three-way valve and saving energy to improve system efficiency, in a waste heat recovery system recycling waste heat.

Another embodiment of the present invention relates to a structure for controlling a temperature of hot-water supply from a waste heat recovery system, and more particularly, to a structure for controlling a temperature of hot-water supply from a waste heat recovery system using a mixing valve capable of stably supplying hot water at a hot-water supply setting temperature during hot-water supply use using the mixing valve and saving energy to improve system efficiency, in the waste heat recovery system recycling waste heat.

Still another embodiment of the present invention relates to a structure for controlling a temperature of hot-water supply from a waste heat recovery system, and more particularly, to a structure for controlling a temperature of hot-water supply from a waste heat recovery system using a heat exchanger in a hot-water tank capable of stably supplying hot water at a hot-water supply setting temperature during the hot-water use supply using the three-way valve and saving energy to improve of a system efficiency, in the waste heat recovery system recycling waste heat.

### [Background Art]

Generally, a waste heat recovery system is a system which supplies heating or hot water by recycling waste heat which is generally discharged and discarded from waste heat sources, such as waste heat from a polymer electrolyte membrane fuel cell (PEMFC), waste heat from an internal combustion engine (ICE), surplus heat, heat from waste incineration, drainage heat, and heat generation of a substation.

For example, the polymer electrolyte membrane fuel cell (PEMFC), which is an environmentally-friendly power generation system directly converting chemical energy generated from oxidation into electric energy, generates a large amount of waste heat used as cooling water during an operation of the system. However, the PEMFC generally discharges the waste heat to the outside through an exhaust port and rarely uses the waste heat. Therefore, it could not actively use heat discharged as waste heat from the system.

From the document JP S58160745 A, which is intended as being the closest state of the art, a structure for controlling a temperature of hot-water supply from a waste heat recovery system is known. This structure uses a three-way valve and comprises a hot-water tank having a waste heat exchanger. This waste heat exchanger recovers waste heat from a waste heat source to generate hot water. A heating heat exchanger for exchanging heat uses the hot water to provide heating. The temperature of the hot water is checked by a temperature sensor. The hot-water tank stores the hot water heat-exchanged by the waste heat exchanger. The structure additionally comprises a boiler, which heats the heat-exchanged hot water from the hot-water tank. The hot water in the boiler is hereby heated to satisfy a temperature set by the user for heating and hot-water supply. This structure supplies heated hot water to a heating space and a hot-water supply space.

Therefore, a waste heat recovery system capable of easily recovering and recycling waste heat generated from a fuel cell system while using the existing boiler apparatus already installed in the home, etc., as it is has been developed.

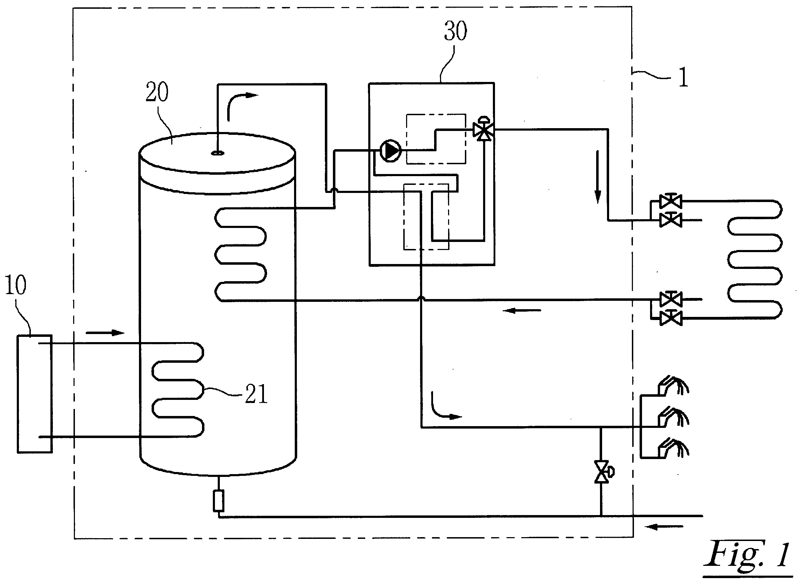

As illustrated in FIG. 1, the existing waste heat recovery system 1 primarily heats water stored in a hot-water tank 20 using a waste heat source 10 through a waste heat exchanger 21 and, if necessary, secondarily heats the primarily heated water using a boiler 30 to supply heating and hot water to a user, and as a result, may obtain an effect of saving more energy than a boiler which immediately uses direct water having a relatively lower temperature.

Specifically the existing waste heat recovery system 1 uses the hot water of the hot-water tank 20 as it is if the temperature of the hot-water tank 20 is higher than a hot-water supply setting temperature of the boiler 30 and additionally operates the boiler 30 to satisfy the hot-water supply setting temperature if the temperature of the hot-water tank 20 is low, when the user uses the hot water.

However, when the temperature of the hot-water tank 20 is minutely lower than the hot-water supply setting temperature of the boiler 30, there is fear of a burn when using the hot-water supply due to the momentary rise of temperature as a result of the sudden operation of the boiler 30 and the unnecessarily repeated operation of the boiler 30 resulted in problems such as reduced durability and a waste of energy of the boiler 30.

Therefore, there has been an active research and development of the waste heat recovery system for providing user convenience and saving energy.

### [Disclosure]

### [Technical Problem]

An embodiment of the present invention aims to solve the aforementioned problems and is directed to providing a structure for controlling a temperature of hot-water supply from a waste heat recovery system using a three-way valve capable of preventing the momentary rise of temperature and a repeated operation of the boiler and being stably operated by not using hot water of a hot-water tank but directly introducing direct water into a boiler using the three-way valve, if the temperature of a hot-water tank is minutely lower than a hot-water supply setting temperature of the boiler when the user uses the hot water.

Another embodiment of the present invention aims to solve the aforementioned problems and is directed to providing a structure for controlling a temperature of hot-water supply from a waste heat recovery system using a mixing valve capable of preventing the momentary rise of temperature and a repeated operation of the boiler and being stably operated by mixing direct water with hot water of a hot-water tank using the mixing valve and introducing the mixed water into a boiler, if the temperature of the hot-water tank is minutely lower than a hot-water supply setting temperature of the boiler when the user uses the hot water.

Still another embodiment of the present invention aims to solve the aforementioned problems and is directed to providing a structure for controlling a temperature of hot-water supply from a waste heat recovery system using a heat exchanger in a hot-water tank capable of preventing the momentary rise of temperature and a repeated operation of a boiler and being stably operated by heating hot water stored in the hot-water tank to remove a minute temperature difference, by switching a three-way valve to introduce a heat medium into a heating heat exchanger as soon as the three-way valve blocks the heat medium from being introduced into a heating space heated by an operation of the boiler, if the temperature of a hot-water tank is minutely lower than a hot-water supply setting temperature of the boiler when the user uses the hot water.

### [Technical Solution]

To achieve the above object, an exemplary embodiment of the present invention is characterized by comprising: a hot-water tank having a waste heat exchanger for recovering waste heat from a waste heat source to generate hot water, a heating heat exchanger for exchanging heat using the hot water so as to provide heating, and a temperature sensor for checking a temperature of the hot water, to store the hot water heat-exchanged by the waste heat exchanger; a boiler heating the heat-exchanged hot water from the hot-water tank to satisfy a temperature set by a user for heating and hot-water supply and supplying the heated hot water to a heating space and a hot-water supply space; a three-way valve installed in a hot-water line introduced from the hot-water tank to the boiler to selectively supply hot water or direct water introduced from the hot-water tank to the boiler; and a controller controlling the three-way valve to block the hot water flowing in from the hot water tank and supplying the direct water to the boiler when it is checked by the temperature sensor that the temperature of the hot-water tank is 0 °C to 10 °C lower than the hot-water supply setting temperature of the boiler.

In addition, to achieve the above object, another exemplary embodiment of the present invention is characterized by comprising: a hot-water tank having a waste heat exchanger for recovering waste heat from a waste heat source to generate hot water, a heating heat exchanger for exchanging heat using the hot water so as to provide heating, and a temperature sensor for checking a temperature of the hot water, to store the hot water heat exchanged by the waste heat exchanger; a boiler heating the heat-exchanged hot water from the hot-water tank to satisfy a temperature set by a user for heating and hot-water supply and supplying the heated hot water to a heating space and a hot-water supply space; a mixing valve installed in a hot-water line introduced from the hot-water tank to the boiler to mix hot water flowing in from the hot-water tank with direct water and supplying the mixed water to the boiler; and a controller controlling the mixing valve, after determining the amount of direct water to be mixed in the hot-water line to which the hot water of the hot-water tank is discharged when it is checked by the temperature sensor that the temperature of the hot-water tank is 0 °C to 10 °C lower than the hot-water supply setting temperature of the boiler.

Also, the controller may use a PID control algorithm using feedback to determine the amount of direct water to be mixed in the hot-water line to which the hot water of the hot-water tank is discharged.

Further, to achieve the above object, still another exemplary embodiment of the present invention is characterized by comprising a hot-water tank having a waste heat exchanger for recovering waste heat from a waste heat source to generate hot water, a heating heat exchanger for exchanging heat using the hot water so as to provide heating, and a temperature sensor for checking a temperature of the hot water, to store the hot water heat-exchanged by the waste heat exchanger; a boiler heating the heat-exchanged hot water from the hot-water tank to satisfy a temperature set by a user for heating and hot-water supply and supplying the heated hot water to a heating space and a hot-water supply space; a three-way valve installed in a hot-water line introduced from the boiler into the heating space to selectively supply a heat medium flowing in from the boiler to the heating space or a recirculation water line; and a controller controlling the three-way valve to block the heat medium flowing in from the boiler into the heating space and directly introducing the heat medium into the heating heat exchanger of the hot-water tank through the recirculated water line so as to heat the hot water of the hot-water tank when it is checked by the temperature sensor that the temperature of the hot-water tank is 0 °C to 10 °C lower than the hot-water supply setting temperature of the boiler.

The structure may further include: a three-way valve configured to have different inlets each connected to the recirculated water line and a water outlet line of the heating heat exchanger and an outlet connected to a heating recirculation water port of the boiler to selectively supply a heat medium introduced from the recirculated water line or a heat medium introduced from the heating heat exchanger to the boiler, wherein the controller controls the three-way valve using the temperature sensor to block the heat medium discharged from the water outlet line of the heating heat exchanger and introduce the heat medium discharged from the recirculated water line into the boiler when the temperature of the heat medium discharged from the recirculated water line is higher than the hot water temperature of the hot-water tank.

### [Advantageous Effects]

According to the structure for controlling a temperature of hot-water supply from a waste heat recovery system using a three-way valve in accordance with the present invention, the hot-water line introduced from the hot-water tank into the boiler may be provided with the three-way valve to prevent the temperature of hot-water supply from momentarily rising so as to provide user convenience and stably operate the boiler so as to increase durability while preventing unnecessarily repeated operation of the boiler so as to increase the energy efficiency.

According to the structure for controlling a temperature of hot-water supply from a waste heat recovery system using a mixing valve in accordance with the present invention, the hot-water line introduced from the hot-water tank into the boiler may be provided with the mixing valve to prevent the temperature of hot-water supply from momentarily rising so as to provide user convenience and stably operate the boiler so as to increase durability while preventing unnecessarily repeated operation of the boiler so as to increase the energy efficiency.

According to the structure for controlling a temperature of hot-water supply from a waste heat recovery system using a heat exchanger in a hot-water tank in accordance with the present invention, the heating line introduced from the boiler into the heating space may be provided with the three-way valve to prevent the temperature of hot-water supply from momentarily rising so as to provide user convenience and stably operate the boiler so as to increase durability while preventing unnecessarily repeated operation of the boiler so as to increase the energy efficiency.

### [Description of Drawings]

FIG. 1 is a schematic diagram of a waste heat recovery system according to the related art.
FIG. 2 is a schematic diagram of a waste heat recovery system according to a first exemplary embodiment of the present invention (using a three-way valve).
FIG. 3 is a schematic diagram of a waste heat recovery system according to a second exemplary embodiment of the present invention (using a mixing valve).
FIG. 4 is a schematic diagram of a waste heat recovery system according to a third exemplary embodiment of the present invention.

### [Best Mode]

In order to fully understand the present invention, preferred embodiments of the invention will be described with reference to the accompanying drawings. Embodiments of the present invention may be modified into many different forms and the scope of the invention should not be limited to the embodiments described in detail below. Rather, these embodiments are provided to give a thorough and complete disclosure of the invention to those skilled in the art. Therefore, shapes of the elements may be exaggerated in the drawings for a clearer understanding of the description, and identical or corresponding elements in each drawing are designated with same reference signs. In addition, description of known functions or configurations determined to hinder understanding of the invention is omitted.

Hereinafter, a first exemplary embodiment of the present invention will be described.

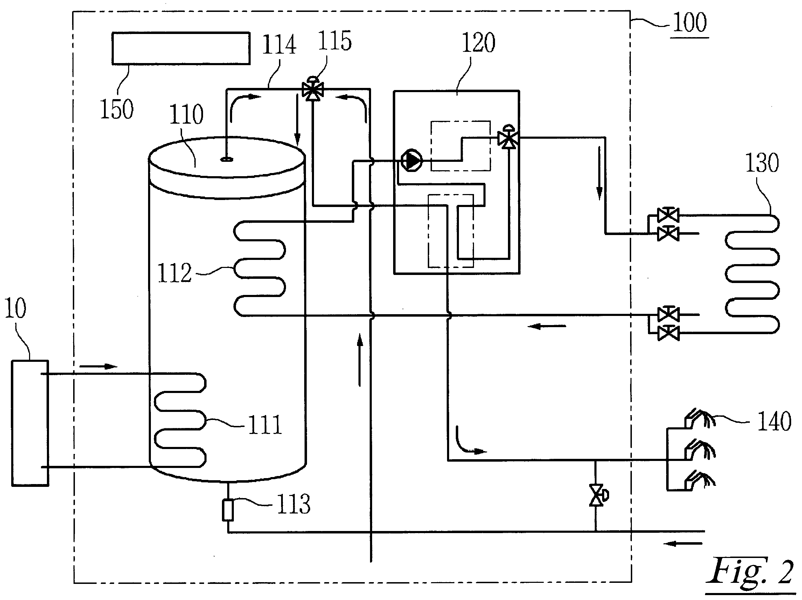

First, as illustrated inn FIG. 2, a waste heat recovery system 100 according to an exemplary embodiment of the present invention comprises: a hot-water tank 110 having a waste heat exchanger 111 which recovers waste heat from a waste heat source 10 to store hot water and a heating heat exchanger 112 which uses the hot water to exchange heat for heating; and a boiler 120 heating the hot water heat-exchanged by the waste heat exchanger 111 and the heating heat exchanger 112 to satisfy temperature set by a user and supplying the hot water to a heating space 130 and a hot-water supply space 140.

In this case, a circulation structure is formed by introducing direct water for cooling the waste heat source 10 into the waste heat source 10 and heating the direct water by the waste heat generated from the waste heat source 10, introducing the direct water heated by the waste heat source 10 into the waste heat exchanger 111 to heat the direct water stored inside the hot-water tank 110 by the waste heat exchanger 111, in order to generate hot water and then returning again to the waste heat source 10 by a pump (not illustrated).

The "direct water" used in the present specification means generally used tap water or ground water and the "hot water" means the direct water heated by the waste heat exchanger 111.

A lower portion of the hot-water tank 110 is attached with a pressure reducing valve 113 to control an internal pressure of the hot-water tank 110 to be constant and is provided with a sensor (not illustrated) for sensing a pressure of the hot-water tank 110 to control the inflow of direct water into the hot-water tank 110 using the pressure reducing valve 113.

The hot-water tank 110 stores hot-water by sufficient insulation using the waste heat exchanger 111, thus allowing hot-water use in the hot-water supply space 140 and the heating space 130.

When the hot-water stored in the hot-water tank 110 has a high temperature exceeding basic setting temperature for cooling the waste heat source 10, the hot-water of the hot-water tank 110 is discharged to efficiently cool the waste heat source 10 and new direct water is introduced to continuously cool the waste heat source 10 by the heat exchange of the waste heat exchanger 111.

The heating heat exchanger 112 is installed in the hot-water tank 110 to recover the waste heat of the waste heat source 10 and recycle itfor heating. In this case, it has a circulation structure in which a working fluid that is useful for heat exchange is circulated in the heating heat exchanger 112, introduced into the boiler 120, heated to the setting temperature required for heating in the boiler 120, and then supplied to the heating space 130 to heat the heating space 130. Next, the heating heat exchanger 112 is connected to a drainage line from the heating space 130 to heat-exchange again.

Therefore, combustion fuel of the boiler 120 may be saved in comparison to when the direct water is directly supplied to the boiler 120 as much as the amount preheated by the hot water tank 110.

In the waste heat recovery system according to the exemplary embodiment of the present invention, to recover the waste heat of the waste heat source 10 and recycle the recovered waste heat for hot-water supply, the hot-water heated in the hot-water tank 110 is introduced into the boiler 120 through a hot-water line 114, then heated by the boiler 120 to reach the hot-water supply setting temperature, and then supplied to the hot-water supply space 140.

In this case, if the temperature of the hot-water tank 110 is minutely lower than the hot-water supply setting temperature of the boiler 120 when the hot water of the hot-water tank 110 which is primarily pre-heated by the waste heat exchanger 111 is supplied to the boiler 120, there is fear of a burn when using the hot-water supply due to the momentary rise of the hot water temperature as a result of the sudden operation of the boiler 120.

Therefore, a three-way valve 115 is additionally provided to prevent hot water from being directly supplied from the hot-water tank 110 to the boiler 120, thereby preventing the momentary rise of temperature.

Specifically, when the hot-water temperature of the hot-water tank 110 is equal to or more than 60 °C and the hot-water supply setting temperature is 60 °C, the hot water of the hot-water tank 110 may be used in the hot-water space 140 as it is without the operation of the boiler 120, but when the hot-water temperature of the hot-water tank 110 is 55 °C to 60 °C and the hot-water supply setting temperature is 60 °C, the boiler 120 is suddenly operated to reach the hot-water supply setting temperature and thus the user may be inconvenienced and the unnecessarily repeated operation of the boiler 120 may occur due to the momentary rise of the hot-water supply temperature.

Therefore, according to the exemplary embodiment of the present invention, the hot-water line 114 introduced from the hot-water tank 110 into the boiler 120 is provided with the three-way valve 115 to block the hot water introduced from the hot water tank 110 and supply the direct water to the boiler 120 when the temperature of the hot-water tank 110 is minutely lower than the hot-water supply setting temperature of the boiler 120, thereby preventing the momentary rise of the hot water temperature due to the sudden operation of the boiler 120.

In this case, a minute difference between the hot-water supply setting temperature of the boiler 120 and the temperature of the hot-water tank 110 is preferably 0 °C to 10 °C.

Further, according to the exemplary embodiment of the present invention, to determine whether the minute difference between the hot water supply setting temperature of the boiler 120 and the temperature of the hot-water tank 110 is 0 °C to 10 °C, the hot-water tank 110 is provided with a temperature sensor and is separately provided with a controller 150 controlling the three-way valve 115 by using the temperature sensor, and thus the three-way valve 115 may selectively supply the hot water of the hot-water tank 110 or the direct water to the boiler 120 under the control of the controller 150.

Therefore, according to the exemplary embodiment of the present invention, the hot-water line 114 introduced from the hot-water tank 110 into the boiler 120 may be provided with the three-way valve 115 to prevent the temperature of hot-water supply from momentarily rising so as to provide user convenience and stably operate the boiler so as to increase durability while preventing unnecessarily repeated operation of the boiler so as to increase the energy efficiency.

Hereinafter, a second exemplary embodiment of the present invention will be described.

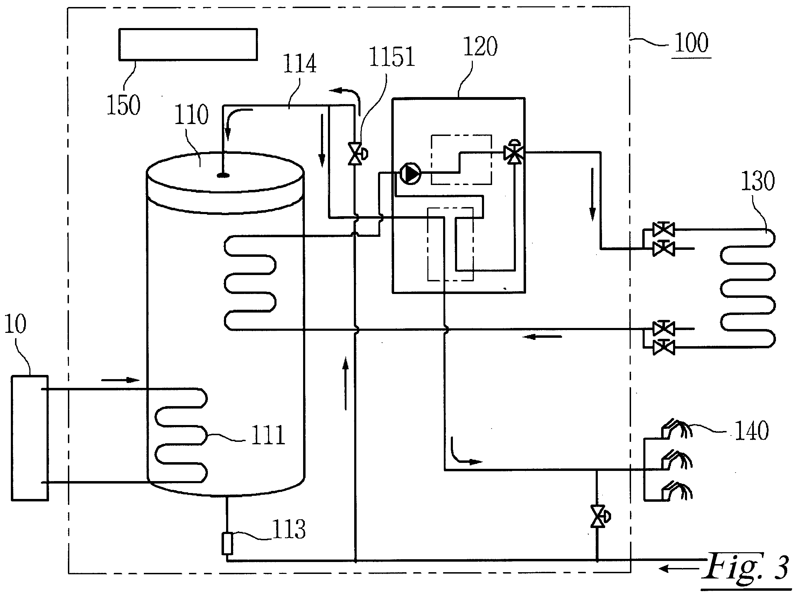

First, as illustrated in FIG. 3, the waste heat recovery system 100 according to an exemplary embodiment of the present invention is comprises: the hot-water tank 110 including the waste heat exchanger 111 which recovers the waste heat from the waste heat source 10 to store the hot water and the heating heat exchanger 112 which uses the hot water to exchange heat for heating; and the boiler 120 heating the hot water heat-exchanged by the waste heat exchanger 111 and the heating heat exchanger 112 to satisfy temperature set by a user and supplying the hot water to the heating space 130 and the hot-water supply space 140.

In this case, a circulation structure is formed by introducing direct water for cooling the waste heat source 10 into the waste heat source 10 and heating by the waste heat generated from the waste heat source 10, introducing the direct water heated by the waste heat source 10 into the waste heat exchanger 111 to heat the direct water stored inside the hot-water tank 110 by the waste heat exchanger 111 in order to generate the hot water and then returning again to the waste heat source 10 by the pump (not illustrated).

The "direct water" used in the present specification means generally used tap water or ground water and the "hot water" means the direct water heated by the waste heat exchanger 111.

The lower portion of the hot-water tank 110 is attached with the pressure reducing valve 113 to control the internal pressure of the hot-water tank 110 to be constant and is provided with the sensor (not illustrated) for sensing the pressure of the hot-water tank 110 to control the inflow of direct water into the hot-water tank 110 using the pressure reducing valve 113.

The hot-water tank 110 stores the hot-water by sufficient insulation using the waste heat exchanger 111, thus allowing hot-water use in the hot-water supply space 140 and the heating space 130.

When the hot-water stored in the hot-water tank 110 has a high temperature exceeding the basic setting temperature for cooling the waste heat source 10, the hot-water of the hot-water tank 110 is discharged to efficiently cool the waste heat source 10 and new direct water is introduced to continuously cool the waste heat source 10 by the heat exchange of the waste heat exchanger 111.

The heating heat exchanger 112 is installed in the hot-water tank 110 to recover the waste heat of the waste heat source 10 and recycle it for heating. In this case, it has a circulation structure in which a working fluid that is useful for heat exchange is circulated in the heating heat exchanger 112, introduced into the boiler 120, heated to the setting temperature required for heating in the boiler 120, and then supplied to the heating space 130 to heat the heating space 130. Next, the heating heat exchanger 112 is connected to a drainage line from the heating space 130 to heat-exchange again.

Therefore, combustion fuel of the boiler 120 may be saved in comparison to when the direct water is directly supplied to the boiler 120 as much as the amount preheated by the hot water tank 110.

In the waste heat recovery system according to the exemplary embodiment of the present invention, to recover the waste heat of the waste heat source 10 and recycle the recovered waste heat for hot-water supply, the hot-water heated in the hot-water tank 110 is introduced into the boiler 120 through a hot-water line 114, then heated by the boiler 120 to reach the hot-water supply setting temperature, and then supplied to the hot-water supply space 140.

In this case, if the temperature of the hot-water tank 110 is minutely lower than the hot-water supply setting temperature of the boiler 120 when the hot water of the hot-water tank 110 which is primarily pre-heated by the waste heat exchanger 111 is supplied to the boiler 120, , there is fear of a burn when using the hot-water supply due to the momentary rise of the hot water temperature as a result of the sudden operation of the boiler 120.

Therefore, a mixing valve 1151 is additionally provided to prevent hot water from being directly supplied from the hot-water tank 110 to the boiler 120, thereby preventing the momentary rise of temperature.

Specifically when the hot-water temperature of the hot-water tank 110 is equal to or more than 60 °C and the hot-water supply setting temperature is 60 °C, the hot water of the hot-water tank 110 may be used in the hot-water space 140 as it is without the operation of the boiler 120, but when the hot-water temperature of the hot-water tank 110 is 55 °C to 60 °C and the hot-water supply setting temperature is 60 °C, the boiler 120 is suddenly operated to reach the hot-water supply setting temperature and thus the user may be inconvenienced and the unnecessarily repeated operation of the boiler 120 may occur due to the momentary rise of the hot-water supply temperature.

Therefore, according to the exemplary embodiment of the present invention, the hot-water line 114 introduced from the hot-water tank 110 into the boiler 120 is provided with the mixing valve 1151 to mix the hot water of the hot-water tank 110 with relatively cold direct water and supply the mixed water to the boiler 120 when the temperature of the hot-water tank 110 is minutely lower than the hot-water supply setting temperature of the boiler 120, thereby preventing the momentary rise of the hot water temperature due to the sudden operation of the boiler 120.

In this case, a minute difference between the hot-water supply setting temperature of the boiler 120 and the temperature of the hot-water tank 110 is preferably 0 °C to 10 °C.

Further, according to the exemplary embodiment of the present invention, to determine whether the minute difference between the hot water supply setting temperature of the boiler 120 and the temperature of the hot-water tank 110 is 0 °C to 10 °C, the hot-water tank 110 is provided with a temperature sensor and is separately provided with a controller 150 controlling the mixing valve 1151 by using the temperature sensor.

In this case, the controller 150 determines the amount of direct water to be mixed in the hot-water line 114 to which the hot water of the hot-water tank 110 is discharged and then controls the mixing valve 1151 to supply the mixed water to the boiler 120.

Further, the controller 150 may use a PID control algorithm using feedback to determine the amount of direct water to be mixed in the hot-water line 114 through which the hot water of the hot-water tank 110 is discharged.

Therefore, according to the exemplary embodiment of the present invention, the hot-water line 114 introduced from the hot-water tank 110 into the boiler 120 may be provided with the mixing valve 1151 to prevent the temperature of hot-water supply from momentarily rising so as to provide user convenience and stably operate the boiler so as to increase durability while preventing unnecessarily repeated operation of the boiler so as to increase the energy efficiency.

Hereinafter, a third exemplary embodiment of the present invention will be described.

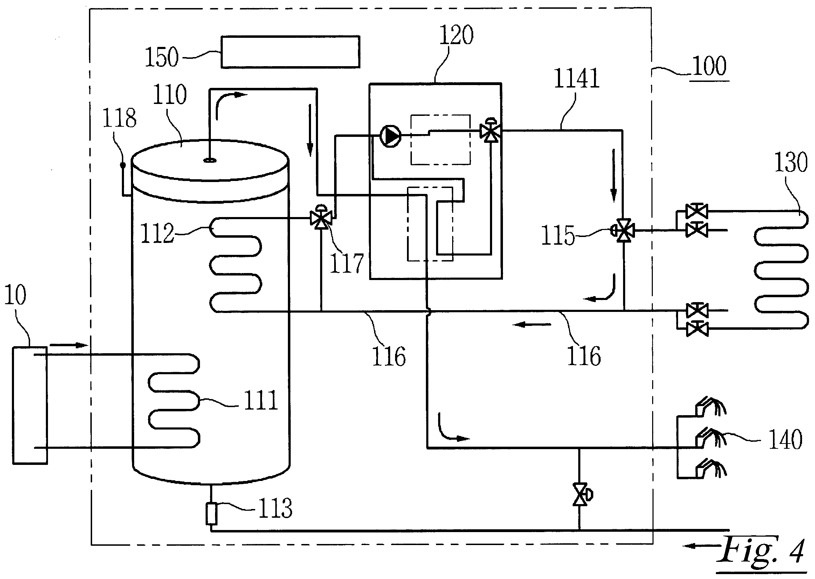

First, as illustrated in FIG. 4, the waste heat recovery system 100 according to the exemplary embodiment of the present invention comprises: the hot-water tank 110 having the waste heat exchanger 111 which recovers the waste heat from the waste heat source 10 to store the hot water and the heating heat exchanger 112 which uses the hot water to exchange heat for heating; and the boiler 120 heating the hot water heat-exchanged by the waste heat exchanger 111 and the heating heat exchanger 112 to satisfy temperature set by a user and supplying the hot water to the heating space 130 and the hot-water supply space 140.

In this case, ta circulation structure is formed by introducing direct water for cooling the waste heat source 10 into the waste heat source 10 and heating the direct water by the waste heat generated from the waste heat source 10, introducing the direct water heated by the waste heat source 10 into the waste heat exchanger 111 to heat the direct water stored inside the hot-water tank 110 by the waste heat exchanger 111 in order to generate the hot water and then returning again to the waste heat source 10 by the pump (not illustrated).

The "direct water" used in the present specification means generally used tap water or ground water and the "hot water" means the direct water heated by the waste heat exchanger 111.

The lower portion of the hot-water tank 110 is attached with the pressure reducing valve 113 to control the internal pressure of the hot-water tank 110 to be constant and is provided with the sensor (not illustrated) for sensing the pressure of the hot-water tank 110 to control the inflow of direct water into the hot-water tank 110 using the pressure reducing valve 113.

The hot-water tank 110 stores the hot-water by sufficient insulation using the waste heat exchanger 111, thus allowing hot-water use in the hot-water supply space 140 and the heating space 130.

When the hot-water stored in the hot-water tank 110 has a high temperature exceeding the basic setting temperature for cooling the waste heat source 10, the hot-water of the hot-water tank 110 is discharged to efficiently cool the waste heat source 10 and new direct water is introduced to continuously cool the waste heat source 10 by the heat exchange of the waste heat exchanger 111.

The heating heat exchanger 112 is installed in the hot-water tank 110 to recover the waste heat of the waste heat source 10 and recycle it for heating. In this case, it has a circulation structure in which a working fluid that is useful for heat exchange is circulated in the heating heat exchanger 112, introduced into the boiler 120, heated to the setting temperature required for heating in the boiler 120, and then supplied to the heating space 130 through a heating line 1141 to heat the heating space 130. Next, the heating heat exchanger 112 is connected to a recirculated water line from the heating space 130 to heat-exchange again.

Therefore, combustion fuel of the boiler 120 may be saved in comparison to when the direct water is directly supplied to the boiler 120 as much as the amount preheated by the hot water tank 110.

In the waste heat recovery system 100, to recover the waste heat of the waste heat source 10 and recycle the recovered waste heat for hot-water supply, the hot-water heated in the hot-water tank 110 is introduced into the boiler 120, then heated by the boiler 120 to reach the hot-water supply setting temperature, and then supplied to the hot-water supply space 140.

In this case, if the temperature of the hot-water tank 110 is minutely lower than the hot-water supply setting temperature of the boiler 120 when the hot water of the hot-water tank 110 which is primarily pre-heated by the waste heat exchanger 111 is supplied to the boiler 120" there is fear of a burn when using the hot-water supply due to the momentary rise of the hot water temperature as a result of the sudden operation of the boiler 120.

Specifically when the hot-water temperature of the hot-water tank 110 is equal to or more than 60 °C and the hot-water supply setting temperature is 60 °C, the hot water of the hot-water tank 110 may be used in the hot-water space 140 as it is without the operation of the boiler 120, but when the hot-water temperature of the hot-water tank 110 is 55 °C to 60 °C and the hot-water supply setting temperature is 60 °C, the boiler 120 is suddenly operated to reach the hot-water supply setting temperature and thus the user may be inconvenienced and the unnecessarily repeated operation of the boiler 120 may occur due to the momentary rise of the hot-water supply temperature.

Therefore, the heating line 1141 is additionally provided with the three-way valve 115 to prevent the hot water from being directly supplied from the boiler 120 to the heating space 130, thereby preventing the momentary rise of temperature.

According to the exemplary embodiment of the present invention, when the hot-water temperature of the hot-water tank 110 is minutely smaller than the hot-water supply setting temperature of the boiler 120, the heating line 1141 introduced from the boiler into the heating space 130 is provided with the three-way valve 115 to block a heat medium introduced from the boiler 120 and directly introduce the heat medium into the heating heat exchanger 112 of the hot-water tank 110 through the recirculated water line 116, thereby heating the hot water stored in the hot-water tank 110.

Therefore, it is possible to remove the minute difference of the hot-water temperature of the hot-water tank 110 to prevent the hot water temperature from momentarily rising due to the sudden operation of the boiler 120.

In this case, a minute difference between the hot-water supply setting temperature of the boiler 120 and the temperature of the hot-water tank 110 is preferably 0 °C to 10 °C.

Further, according to the exemplary embodiment of the present invention, to determine whether the minute difference between the hot water supply setting temperature of the boiler 120 and the temperature of the hot-water tank 110 is 0 °C to 10 °C, the hot-water tank 110 is provided with the temperature sensor 118 and is separately provided with a controller 150 controlling the three-way valve 115 by using the temperature sensor 118.

In this case, the controller 150 controls the three-way valve 115 to block the heat medium introduced from the boiler 120 and directly introduces the heat medium into the heating heat exchanger 112 through the recirculated water line 116 to increase the hot water temperature stored in the hot-water tank 110, thereby removing the minute temperature difference as described above.

Further, according to the exemplary embodiment of the present invention, at the time of using the heating, a three-way valve 117 having different inlets which are each connected to the recirculated water line 116 and a water outlet line of the heating heat exchanger 112 is provided to block the heat medium discharged from the water outlet line of the heating heat exchanger 112 and introduce the heat medium discharged from the recirculated water line 116 into the boiler 120 when the temperature of the heat medium discharged from the recirculated water line 116 is higher than the hot-water temperature of the hot-water tank 110, thereby reduction in combustion fuel of the boiler 120 can be expected.

Further, the controller 150 compares the temperature of the heat medium discharged from the recirculated water line 116 with the hot-water temperature of the hot-water tank 110 to control the three-way valve 117.

Therefore, according to the exemplary embodiment of the present invention, the heating line 1141 introduced from the boiler 120 into the heating space 130 is provided with the three-way valve 115 to prevent the temperature of hot-water supply from momentarily rising so as to provide user convenience and the connection portion between the recirculated water line 116 and the water outlet line of the heating heat exchanger 112 is provided with the three-way valve 117 to stably operate the boiler so as to increase durability while preventing unnecessarily repeated operation of the boiler so as to increase the energy efficiency.

The exemplary embodiments of the structure for controlling the temperature of hot-water supply from a waste heat recovery system using a three-way valve as described above are only examples. Therefore, it will be appreciated by those skilled in the art that various modifications and other equivalent embodiments are possible from the present invention. Therefore, it may be appreciated that the present invention is not limited to the forms mentioned in the above detailed description. Accordingly, the actual technical scope of the present invention to be protected must be determined by the spirit of the appended claims. Further, it is to be construed that the present invention includes the spirit of the present invention as defined in the appended claims as well as all modifications, equivalents, and substitutions within its scope.

### [Detailed Description of Main Elements]

- 10:: Waste heat source
- 100:: Waste heat recovery system
- 110:: Hot-water tank
- 111:: Waste heat exchanger
- 112:: Heating heat exchanger
- 113:: Pressure reducing valve
- 114:: Hot-water line
- 1141:: Heating line
- 115, 117:: Three-way valve
- 1151:: Mixing valve
- 116:: Recirculated water line
- 118:: Temperature sensor
- 120:: Boiler
- 130:: Heating space
- 140:: Hot-water supply space
- 150:: Controller

## Claims

1. A structure for controlling a temperature of hot-water supply from a waste heat recovery system using a mixing valve, comprising:
a hot-water tank (110) having a waste heat exchanger (111) for recovering waste heat from a waste heat source (10) to generate hot water, a heating heat exchanger (112) for exchanging heat using the hot water so as to provide heating, and a temperature sensor for checking a temperature of the hot water, to store the hot water heat-exchanged by the waste heat exchanger (111);
a boiler (120) heating the heat-exchanged hot water from the hot-water tank (110) to satisfy a temperature set by a user for heating and hot-water supply and supplying the heated hot water to a heating space (130) and a hot-water supply space (140);
a mixing valve (1151) installed in a hot-water line (114) introduced from the hot-water tank (110) into the boiler (120) to mix hot water flowing in from the hot-water tank (110) with direct water and supplying the mixed water to the boiler (120); **characterized by**
a controller (150) controlling the mixing valve (1151) after determining the amount of direct water to be mixed in the hot-water line (114) to which the hot water of the hot-water tank (110) is discharged when it is checked by the temperature sensor that the temperature of the hot-water tank (110) is 0 °C to 10 °C lower than the hot-water supply setting temperature of the boiler (120).

2. The structure of claim 1, **characterized in that** the controller (150) uses a PID control algorithm using feedback to determine the amount of direct water to be mixed in the hot-water line (114) to which the hot water of the hot-water tank (110) is discharged.
